# EUROPEAN PATENT SPECIFICATION

(11) **EP 3 561 668 B1**
(45) Date of publication and mention of the grant of the patent: **31.05.2023**
(21) Application number: 19161470.0
(22) Date of filing: 08.03.2019
(51) Int. Cl.: G06F 9/46, G06F 9/50, G06N 20/10

(54) **METHOD AND DEVICE FOR COMPUTING ESTIMATION OUTPUT DATA**
VERFAHREN UND VORRICHTUNG ZUR BERECHNUNG DER SCHÄTZUNG VON AUSGABEDATEN
PROCÉDÉ ET DISPOSITIF POUR CALCULER DES DONNÉES DE SORTIE D'ESTIMATION

(30) Priority: 27.04.2018 SE 1850506
(43) Date of publication of application: 30.10.2019
(73) Proprietor: Sony Network Communications Europe B.V., 2132LS Hoofddorp (NL)
(72) Inventor: PRIYANTO, Basuki, 22468 Lund (SE); SUNDSTRÖM, Henrik, 24736 Södra Sandby (SE); MELLQVIST, Anders, 21228 Malmö (SE); NORD, Lars, 223 59 Lund (SE); PETEF, Andrej, 22474 Lund (SE); ISBERG, Anders, 232 53 Åkarp (SE)
(74) Representative: Neij & Lindberg AB

(56) References cited:
- US-A1- 2018 005 118
- KATTEPUR AJAY ET AL: "A-Priori Estimation of Computation Times in Fog Networked Robotics", 2017 IEEE INTERNATIONAL CONFERENCE ON EDGE COMPUTING (EDGE), IEEE, 25 June 2017 (2017-06-25), pages 9-16, XP033151575, DOI: 10.1109/IEEE.EDGE.2017.11 [retrieved on 2017-09-07]
- MASRI WASSIM ET AL: "Minimizing delay in IoT systems through collaborative fog-to-fog (F2F) communication", 2017 NINTH INTERNATIONAL CONFERENCE ON UBIQUITOUS AND FUTURE NETWORKS (ICUFN), IEEE, 4 July 2017 (2017-07-04), pages 1005-1010, XP033130483, DOI: 10.1109/ICUFN.2017.7993950 [retrieved on 2017-07-26]

## Description

### Technical field

This disclosure relates to methods and devices for computing estimation output data based on obtained sensor data. More specifically, the solutions provided herein pertain to methods for sharing sensor data between devices with different estimation models, so as to improve the possibility to obtain an estimation result.

### Background

With the ever-increasing expansion of the Internet, the variety and number of devices that may be accessed is virtually limitless. Communication networks, usable for devices and users to interconnect, include wired systems as well as wireless systems, such as radio communication networks specified under the 3^{rd} Generation Partnership Project, commonly referred to as 3GPP. While wireless communication was originally setup for person to person communication, there is presently high focus on the development of device to machine-type communication, both within 3GPP system development and in other models.

A term commonly referred to is the Internet of things (IoT), which a network of physical devices, vehicles, home appliances and other items embedded with electronics, software, sensors, actuators, and connectivity which enables these objects to connect and exchange data. It has been forecast that IoT devices will be surrounding us by the billions within the next few years to come, with a recent quote declaring that "By 2030, 500 billion devices and objects will be connected to the Internet." Hence, one may safely assume that we will be surrounded by more and less capable sensing devices in our close vicinity.

Less capable lower cost IoT devices will typically be deployed at large scale by the network edge, while more capable devices typically being more rarely deployed or having the function of a higher network node. An edge device is a device which provides an entry point into enterprise or service provider core networks. Examples include routers, routing switches, integrated access devices (IADs), multiplexers, and a variety of metropolitan area network (MAN) and wide area network (WAN) access devices. Edge devices may also provide connections into carrier and service provider networks. In general, edge devices may be routers that provide authenticated access to faster, more efficient backbone and core networks. The edge devices will normally be interconnected "vertically" in a peer-to-peer fashion using WAN/LPWAN/BLE/WiFi communication technologies, or "laterally" in mesh, one-to-many, or one-to-one fashion using local communication technologies.

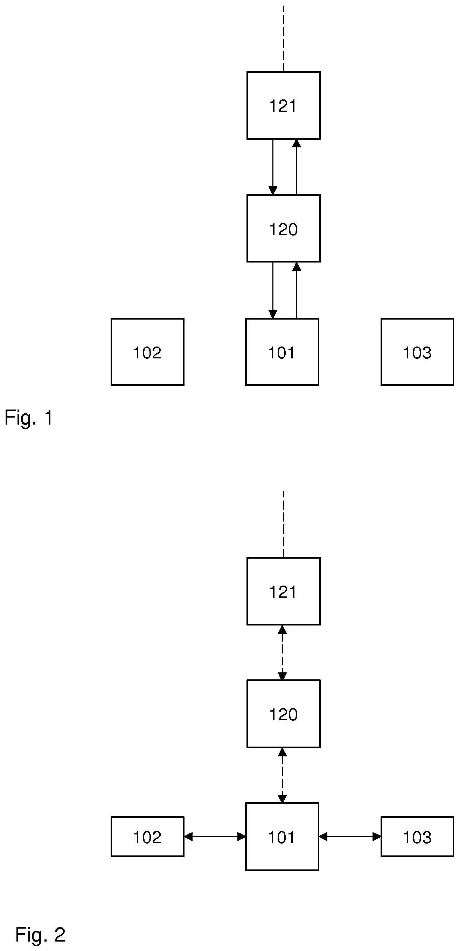

The trend is to make the edge device smarter, so e.g. edge routers often include Quality of Service (QoS) and multi-service functions to manage different types of traffic. However, computation resources may be more powerful in vertically connected core network nodes. One suggested concept for enhancing computation resources, indicated in Fig. 1, is thus to escalate a specific compute task from an edge device 101 to a higher (more capable) network node 120, or even further to a higher node 121, when resources are not sufficient to satisfactorily fulfill a compute task in the edge device 101. A basic example includes an edge deployed estimation model in a sensor device 101, such as a camera, which based upon its current input may not be able to fulfill its task, such as people counting, to a sufficient level of confidence. The reason may be that the sensor device 101 cannot host a sufficiently complex estimation model given its limited resources, hence for this specific input it decides to transfer the image data to a higher end node 120, 121 and request a more qualitative decision to this estimation task. Transmission in the uplink from the edge device 101 may thus include sensor data and a particular task associated with the data. An improved result, such as e.g. data representing the number of people detected in the image, may thereafter be received in the downlink. This state of the art vertical escalation can be an effective approach, enabling both the deployment of low cost edge devices at scale, and simultaneously means for having a high quality "ground truth" decision when occasionally needed. However, the escalation of sensor data, such as data representing an image, over WAN networks, e.g. a cellular wireless network, might become quite costly since cellular bandwidth may be a scarce resource. Furthermore, the WAN bandwidth can be insufficient, or the connectivity might even be unavailable in non-stationary environments. Additionally, it may be significantly more costly power wise to transfer the data over a WAN network than performing the required compute locally.

Another suggested method, as represented by Fig. 2, is distributed compute by task breakdown. This may e.g. involve dividing a compute intensive task into sub-tasks which are distributed from an edge device 101 to several devices 102, 103, workers, in close vicinity. Results are then aggregated back to the requesting node 101 to compile the result. A compute task shared among edge devices in the close vicinity would constitute something known as a "Mist Computing" system. Such a system may be used for parallel computing, i.e. solving big problems by breaking them up into smaller ones on smaller processors, as provided e.g. by Thinnect. This involves a hierarchy of managing compute distribution, and data (result) aggregation ("fusing") at a fusing node 101 at the edge, which is a more capable device than the other devices 102, 103 assisting with computation.

US2018005118 discloses various technologies pertaining to generating control inputs for a cyber-physical system. A prediction concerning a phenomenon can be generated, utilizing a classifier, based on sensor data acquired by a sensor. The prediction can include a probability distribution over a set of possible values of the phenomenon, where the phenomenon pertains to the cyber-physical system or an environment in which the cyber-physical system operates. Control inputs for the cyber-physical system that satisfy constraints that maintain safe operation of the cyber-physical system in the environment can be synthesized. The constraints can be based on the prediction that includes the probability distribution over the set of possible values of the phenomenon.

However, there still exists a need for improvement in execution of computation in devices, where assistance may be required from other devices to fulfil a certain task. As an example, it would be valuable in wireless IoT systems in general to find means for limiting both frequency or magnitude of escalations, and alleviation of the need for complex device software for breaking down and aggregating computation tasks and results.

### Summary

The proposed solution is defined by the terms of the independent claims, and various embodiments are set out in the dependent claims.

In accordance with a first aspect, a method is provided, performed at a first edge device connected in uplink to a network node of a communication network for detection of an object based on sensor data, comprising:
obtaining first sensor data;
processing the first sensor data for object detection to obtain a first estimation score based on said first sensor data, using a first estimation model;
transmitting, through a lateral connection in a local network to a second edge device, either:
   said first sensor data, or
   a request for a second estimation score;
   receiving a second estimation score computed in the second edge device using a second estimation model for object detection based on either:
      - said first sensor data when the first sensor data is transmitted through the lateral connection, or
      - second sensor data when the request for a second estimation score is transmitted through the lateral connection, and wherein the second sensor data is obtained in the second edge device and pertains to a common environment as the first sensor data; and
   dependent on the first estimation score and the received second estimation score, determining estimation output data.

In accordance with a second aspect, an edge device is provided for detection of an object based on sensor data, comprising:
an uplink connection to a network node of a communication network;
a sensor input interface for obtaining first sensor data from one or more sensors;
a control unit, which control unit includes:
   a data memory holding computer program code representing a first local estimation model, and
   a processing device configured to execute the computer program code;
   wherein the control unit is configured to control the device to:
      - obtain first sensor data;
      - process said first sensor data for object detection to obtain a first estimation score based on said first sensor data, using a first estimation model;
      - transmit said first sensor data to a second edge device through a lateral connection in a local network;
      - receive a second estimation score, computed in the second edge device based on said first sensor data using a second estimation model; and
      - dependent on the first estimation score and the received second estimation score, determine estimation output data.

In accordance with a third aspect, an edge device is provided for detection of an object based on sensor data, comprising:
an uplink connection to a network node of a communication network;
a sensor input interface for obtaining first sensor data from one or more sensors
a control unit, which control unit includes:
   a data memory holding computer program code representing a first local estimation model, and
   a processing device configured to execute the computer program code;
   wherein the control unit is configured to control the device to:
      - obtain first sensor data;
      - process said first sensor data for object detection to obtain a first estimation score based on said first sensor data, using a first estimation model;
      - transmit, to a second edge device through a lateral connection in a local network, a request for a second estimation score;
      - receive a second estimation score, computed in the second device based on second sensor data using a second estimation model, wherein the second sensor data is obtained in the second edge device and pertains to a common environment as the first sensor data; and
      - dependent on the first estimation score and the received second estimation score, determine estimation output data.

### Brief description of drawings

Various embodiments will be described with reference to the drawings, in which
Figs 1 and 2 illustrate a general setup for vertical and lateral distribution of computation tasks with respect to an edge device of a communication network;
Fig. 3 schematically illustrates a device configured to operate in accordance with the suggested embodiments;
Fig. 4 schematically illustrates a system setup for operation of a device in accordance with the embodiments proposed herein;
Figs 5A and 5B schematically illustrate a setup for operating a method according to one embodiment; and
Fig. 6 schematically illustrates an embodiment of a general method, related to steps carried out by a device, or as controlled by a computer program product executed in a device.
Fig. 7 schematically illustrates an alternative embodiment of a general method, related to steps carried out by a device, or as controlled by a computer program product executed in a device.

### Detailed description

The invention will be described more fully hereinafter with reference to the accompanying drawings, in which embodiments of the invention are shown.

It will be understood that, when an element is referred to as being "connected" to another element, it can be directly connected to the other element or intervening elements may be present. In contrast, when an element is referred to as being "directly connected" to another element, there are no intervening elements present. Like numbers refer to like elements throughout. It will furthermore be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of the present invention. As used herein, the term "and/or" includes any and all combinations of one or more of the associated listed items.

Well-known functions or constructions may not be described in detail for brevity and/or clarity. Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of this specification and the relevant art and will not be interpreted in an idealized or overly formal sense expressly so defined herein.

Embodiments of the invention are described herein with reference to schematic illustrations of idealized embodiments of the invention. As such, variations from the shapes and relative sizes of the illustrations as a result, for example, of manufacturing techniques and/or tolerances, are to be expected. Thus, embodiments of the invention should not be construed as limited to the particular shapes and relative sizes of regions illustrated herein but are to include deviations in shapes and/or relative sizes that result, for example, from different operational constraints and/or from manufacturing constraints. Thus, the elements illustrated in the figures are schematic in nature and their shapes are not intended to illustrate the actual shape of a region of a device and are not intended to limit the scope of the invention.

In the context of this disclosure, solutions are suggested for improving a method for computing estimation output data in a device, based on an estimation model. Such a method typically involves obtaining sensor data, wherein an estimation task is to be carried out based on that sensor data. The sensor data may e.g. include a characterization of electromagnetic data, such light intensity and spectral frequency at various points in an image plane, as obtained by an image sensor. The sensor data may alternatively, or additionally, include acoustic data, e.g. comprising magnitude and spectral characteristics over a period of time, meteorological data pertaining to e.g. wind, temperature and air pressure, seismological data, fluid flow data etc.

The suggested solutions pertain to a concept and method of "escalating horizontally" by distributing an estimation request to a multitude of similar devices and/or any device that support/perform similar function(s) in the close vicinity, for the purpose of combining their collective results into an overall improved estimation. Hence, the proposed solution neither represents a traditional estimation model escalation-based system as in Fig. 1, nor a compute task break down system as represented in Fig. 2.

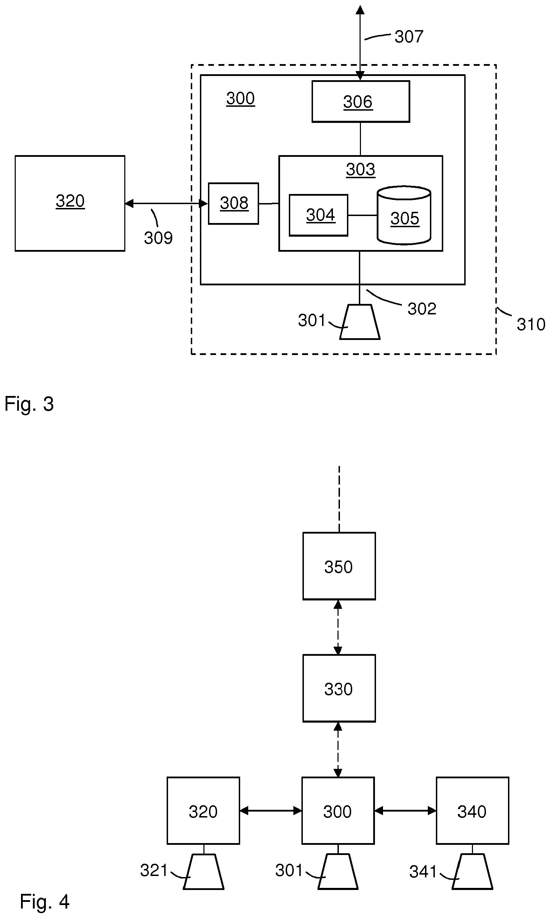

Fig. 3 schematically illustrates a device 300, configured to carry out the method as provided for in various embodiments herein. The device 300 is thus configured to operate as a first device 300 for computing estimation output data based on sensor data. The device 300 is configured to operate as a computation device and comprises a sensor input interface 302 for obtaining first sensor data from one or more sensors 301. In various embodiments, the device 300 may include said one or more sensors 301 in a common structure or casing 310. In an alternative embodiment, the sensor input interface 302 may be connectable to an external sensor 301. The device 300 includes a control unit 303, which control unit 303 may include a processing device 304 and a data memory 305 holding computer program code representing a first local estimation model. The processing device 304 may include one or more microprocessors, and the data memory 305 may e.g. include a non-volatile memory storage. The processing device 304 is preferably configured to execute the computer program code such that the control unit 303 is configured to control the device to operate as provided in the embodiments of the method suggested herein.

The device 300 is an edge device of a communication network, such as a WAN, comprising a number of further nodes which have higher hierarchy in the network topology. The device 300 may further be configured to transmit computed estimation output data in uplink 307 to one or more network nodes of the communication network. In various embodiments, the device 300 may include a network interface 306, operable to set up a vertical connection 309 between the device 300 and the communication network. The network interface 306 is preferably configured for wired communication but may alternatively or optionally include a wireless communication interface. Specifically, where the network interface 306 is configured to set up a wireless connection 309, such as over a radio interface, resources for escalation may be limited in terms of cost and bandwidth.

In one embodiment, the control unit 303 is configured to control the device 300 to compute a first estimation score based on first sensor data obtained, using the first local estimation model. In the context of this description, an estimation score can take various forms, from numbers, such as a probability factor, to strings to entire data structures. The estimation score may include or be associated with a value related to reliability or accuracy and may be related to a specific estimation task. In various scenarios, this computation may be carried out responsive to obtaining such an estimation task, e.g. to compute an estimation result. Such an estimation task may be a periodically scheduled reoccurring event. In other scenarios, the estimation task may be triggered by a request from another device or network node, or e.g. triggered by receiving first sensor data from the sensor 301.

The device 300 may further comprise a communication interface or connector 308, configured for setting up a lateral communication with a second device 320, and preferably with a plurality of second devices. In a preferred embodiment, the communication interface 308 is separate from the network connector 306. Furthermore, the communication interface 308 may configured to operate a connection with further devices 320 in the vicinity of the device 300. By means of the lateral communication interface 308, a communication connection may be established to another device 320, such as laterally another edge device, e.g. in mesh, one-to-many, or one-to-one fashion using local a communication technology, such as a radio communication technology. Examples of such communication technologies include ZigBee, BLE (Bluetooth Low Energy), WiFi, and D2D LTE under 3GPP specifications. The device 300 may thus be configured to receive a second estimation score, computed using a second local estimation model in a second device 320, wherein the second estimation score is received through the lateral communication interface 308. As will be outlined for various embodiments, the control unit 303 is configured to compute estimation output data, dependent on the first estimation score and the received second estimation score. Computed estimation output data may be stored locally, in the data memory 305 or another memory storage, and/or by transmitted to another node. In various embodiments, the device 300 may be configured to transmit the computed estimation output data uplink vertically by means of the communication interface 306, to another node in the communication network, or connected to the communication network, such as a server.

Fig. 4 schematically illustrates a system and device setup, configured for carrying out a method according to various embodiments outlined herein. The proposed solution relates to a method performed at a first device 300, for computing estimation output data, and the device 300 may e.g. be configured in accordance with any of the embodiments outlined with reference to Fig. 3. The device 300 is connected to, or includes, a first sensor 301, and the device 300 is configured to obtain first sensor data from the first sensor 301. In broad terms, one embodiment of the method includes the steps of
computing a first estimation score based on said first sensor data, using a first estimation model;
transmitting said first sensor data to a second device 320;
receiving a second estimation score based on said first sensor data, computed using a second estimation model in the second device; and
dependent on the first estimation score and the received second estimation score, determining estimation output data.

In the context of this method, there may be two or more devices 300, 320, 340 in close vicinity, and each one of these devices may have limited capability for estimation computation, given a certain task. Contrary to lateral distribution of different compute tasks, the same task is provided to one or more devices 320, 340, as provided to the first device 300, but with different estimation model. Furthermore, by utilizing their collective compute resources, an improved result similar to what an escalation would otherwise have provided, may be obtained. As mentioned, the devices 300, 320, 340 may be interconnected in a network topology that enables efficient means for intercommunication, e.g. mesh network, star network or a peer to peer network. Compared to the prior art this method makes use of a system including devices 300, 320, 340 with equal/similar compute capability, even the "fusing node" device 300. In a second estimation another device 320 or 340 may become the "fusing node" in this network. Furthermore, the parallel computing is here not part of a bigger problem solving by means of sharing different tasks, instead it may be initiated ad-hoc based on a device 300 requiring additional decision-making help from the neighboring resources/devices 320, 340. It should be noted, that while Fig. 4 illustrates three laterally connectable devices with estimation computation capability, a system and method according to the embodiments described herein may include any number of such devices including at least two. For the sake of simplicity, the description of functions related to acts carried out with respect to such devices will in most cases be restricted to the first device 300 and the second device 320.

In various embodiments, the device 300 may be configured to determine a quality level of a first estimation score, carried out in the first device 300 based on the obtained sensor data, wherein the step of transmitting said first sensor data is carried out if said quality level does not meet a threshold level. If a sufficient quality is obtained, such as a confidence level exceeding a certain threshold level, the device 300 may in one embodiment be configured not to transmit its first sensor data to another device 320, 340. In an alternative embodiment, the device 300 may be configured to nevertheless transmit the first sensor data to a second device 320, 340, e.g. for the purpose of increasing a confidence level of the estimation result, or for obtaining a measure on variance in estimation scores from the different devices 300, 320, 340.

According to various embodiments, a beneficial effect is provided by the fact that the same sensor data, i.e. the first sensor data, is used as input for computing an estimation score, using two or more different estimation models. In this context, the first estimation model which is operable in the first device 300, and the second estimation model which is operable in the second device 320, may be configured to compute an estimation score based on the same estimation task.

In one exemplary embodiment, the estimation task may be a certain function, such as e.g. image processing for image recognition. While the first device 300 computes an estimation score based on its obtained first sensor data, the same first sensor data may be transmitted to the second device 320, where image processing is carried out using the second estimation model to obtain a second estimation score. The second estimation score is then transmitted back to the first device 300 over a connection 309 through the lateral communication interface 308.

In another exemplary embodiment, the estimation task may be person identification based on sensor input, but the type of sensor data based on which the two estimation models operate may be different, e.g. where the first device 300 is configured for image recognition whereas the second device 320 is configured for audio recognition. In a variant of such an embodiment, the first 300 or second 320 device may be configured for both image recognition and audio recognition, whereas the other of the first 300 and second devices 320 may be configured for only one of said recognition techniques.

In various embodiments, the first estimation model and the second estimation model are learning models, configured for providing an estimation output based on a common sensor data type. In such an embodiment, the estimation model of the respective device 300, 320 may be configured to be trained with obtained sensor data, including sensor data received from a connected sensor 301, 321, and potentially also sensor data obtained by lateral communication from other devices 300, 320, 340 or other sources, based on which the training model is configured to compute an estimation score. Typically, the first estimation model is configured to be trained with sensor data obtained in the first device 300, which predominantly will include first sensor data from the connected sensor 301, and the second estimation model is configured to be trained with second sensor data obtained in the second device 320, predominantly received from the second sensor 321.

In certain embodiments, the first and second estimation models may originate from a similar base model, which is trained by adapting to their specific environment. In other words, devices 300, 320 which may be edge-deployed are configured to adapt and improve their estimation model performance by continuous learning from the sensor data they obtain. Similar devices in close vicinity might originally have been deployed with e.g. the same global estimation model but may additionally have the ability to receive an updated model from a higher network node 330, 350 which have been collecting escalated estimation output data and are capable of re-training the less complex model of the lower end node 300, 320. While being in close vicinity their sensed data is likely to be correlated to some extent, but their models will develop slightly specialized properties, such as by applying different weight functions to various parameters in the estimation model. The devices 300, 320 are connected to sensors 301, 321 which are configured to collect sensor data from a common environment. As such, the first sensor data and the second sensor data pertain to a common environment. Nevertheless, the first sensor 301 and the second sensor 321 may e.g. be configured to collect sensor data from different angles, and/or from positions with different noise conditions related to the specific type of sensor data.

A general embodiment will now be described, which falls within the scope of the methods and devices outlined herein, and where the same references are applied to corresponding elements. This general embodiment relates to a system and method for an enhanced decision-making procedure, where an estimation task is at hand, involving devices 300, 320 with means of producing a local estimation result from obtained input sensor data by its own. Various estimation tasks are plausible but include the objective of making an estimation based on at least obtained sensor data. The task may e.g. be to detect an object, such as "human", "dog" or "car" in an obtained image, which may be still or video. Another task may be to determine the number of humans in an image, or the size or shape of an object, to estimate gender or age of a human, or to detect a specific person.

In various embodiments, by running an estimation model on obtained first sensor data in a first device 300, the outcome may be that
a. Estimation result is satisfactory, e.g. by determining that a confidence level is higher than a threshold.
b. Estimation is uncertain, e.g. that the confidence level is lower than the threshold.

The estimation result is in the form of an estimation score. The general concepts of "score" as a measure of estimation accuracy/certainty, and estimation variance as a measure of accuracy/score distribution, are not standardized model outputs, but may be inherent properties of the estimation model, which may typically be derived or determined a priori.

The first device 300 has means of distributing its first sensor data to similar devices 320 in the close vicinity, e.g. by incorporating an interface 308 for setting up a wireless local area network connection 309 to the second device 320. In various embodiment, devices 300, 320, 340 in the close vicinity may have knowledge of, and are capable of communicating with, each other. In one embodiment, devices 300, 320, 340 are configured to implement a discovery protocol from which similar devices, who could take on a related estimation task, can be found. The discovery protocol may be implemented to perform actual discovery scanning as a one-time or a repeated process for detecting other devices 320, 340 in the vicinity. Alternatively, the discovery protocol may be configured to trigger the device 300 to actively page or search for other devices 320, 340 in the nearby area in range when needed. This may be a matter of performance considerations. Their specific ability to take on such a task at a particular time could also be negotiated. To facilitate a distributed compute operation, such devices 300, 320, 340 may share its profile or status, e.g. computing power, current computing load, specific/dedicated function such as image processing etc. Several ways of defining such a discovery protocol may be considered. In a simple implementation a specific known product type could be discovered by its designated product ID, thus its capabilities can be known a priori. In a more generalized protocol such capabilities could be exchanged in a standard format, where e.g. (compute) capability classes and functional classes are defined. There are a number of standard networking discovery protocols concerning services and devices, e.g. DHCP, UPnP and many others which may be employed in the embodiments provided herein, and which may be suitable or adapted for large scale deployment and interworking of IoT devices, which could also include basic descriptors of certain properties of the mentioned functionality, compute capability etc.

Upon obtaining an insufficient result, i.e. result=b above, the first device 300 asks or sends a request to neighboring devices 320, 340 to run their estimation model on the sensor input.
i. In one embodiment, as discussed earlier, the first sensor data can be transmitted from the first device 300 to one or more neighboring devices 320, 340 using local area radio connectivity 309.
ii. In an alternative embodiment, a request is sent to one or more neighboring devices 320, 340 using local area radio connectivity to obtain or make use of obtained second sensor data gathered locally in the neighboring device 320, 340. An example may be that the first device 300 is connected to a first sensor 301 covering a first angle of an environment, whereas a second sensor 321 connected to a second device 320 overlaps the same area but from a different angle. In such an embodiment, the request may only be for an estimation result, and less data is communicated between the devices.

The further individual devices' 320, 340 compute model results are then provided back to the original device 300, preferably using the same local area connection 309.

An ensemble-based decision may then be computed based on the collected computed estimation results, preferably in the first device 300, or alternatively by escalating the collected computed estimation results vertically to a higher node 330, 350 in a communication network in which the device 300 is an edge device.

Such an ensemble estimation result is typically enhancing upon an individual device's 300 result, specifically when the included devices have independently adapted models trained with somewhat correlated data, which can typically be the case with devices in close vicinity. Typically, such ensemble results are further enhanced the more devices 300, 320, 340 are contributing, hence an inherent goal here may be to utilize any available compute resource in the close vicinity.

One specific property enabling this strengthened confidence in the result relies upon the fact that each individual estimation model will produce result in the form of a score associated with a certain variance. Specifically, if the estimation models are weaker (less complex) the resulting variance will be higher.

In various embodiments, a device 300 may be configured as an edge deployment 300 of e.g. neural network model. A problem of executing estimation computation in such comparatively simple or low capability devices 300, as opposed to executing the computation in resources 330, 350 available in a communication network, is that such detection/prediction models (algorithms) need to be less computationally complex due to the resource-constrained device 300, such as an IoT edge device. Hence, the estimation model which is local to the device 300 may be considered "weak", which means it may be derived from a "strong" (accurate) reference model which has had to be severely simplified to be less complex. As a result, an estimation score or result obtained by such a local estimation model may be fairly good on average, but the estimation model is less robust, and the estimation result has a greater variance in estimation or prediction distribution. As an example, from one estimation to another, a seemingly small variation in sensor may vary greatly in output. The aggregated, estimation results of an ensemble of similar, but not identical, estimation models operating on an identical sensor input data would result in a more consistent, i.e. robust, estimation result as estimation output data, with reduced variance. The collective result may e.g. be the mean of all the scores with a significantly reduced variance, all allowing for a more reliable result. One approach may involve weighing the estimation score obtained by the similar nearby estimation models in the devices 300, 320, 340. In various embodiments, an improved score may thus be derived by e.g. determining an accuracy or reliability measure associated with each estimation score obtained from the various devices 300, 320, 340. A measure of the accuracy or reliability of the estimation score may e.g. be provided by the respective device 300, 320, 340, such as a variance value or other, or it may be determined in the first device 300. The first device 300 may thus be configured to apply weight factors to each estimation score, dependent on the determined accuracy or reliability, such that greater consideration is taken to estimation scores that are more reliable when the ensemble-based decision or estimation output data is computed. As an example, an image may be obtained in low light conditions by a first sensor 301, which commonly operates in bright light conditions. The first device 300 may then share its first sensor data with a second device 320, which normally detects images in low light conditions. Upon receiving an estimation score computed in the second device 320 based on its local estimation model, trained for low light conditions, estimation output data may be determined in the first device 300 dependent on both the first estimation score and the received second estimation score. Furthermore, the first device 300 may be configured to determine a value associated with a reliability of at least one of said first and second estimation score, wherein determining estimation output data may include weighing said first and second estimation score. This may be accomplished by e.g. applying one or more weight factors to one or more of the computed estimation scores.

A system, device 300 and method according to the embodiments provided herein can apply to sensing data of many sorts, such as image (e.g. object recognition), sound (e.g. event detection), multi-metric estimations, or even data of less complexity.

In the embodiments referred to herein, an estimation model may one of many classical machine learning models, often referred to under the term "predictive modelling" or "machine learning", using statistics to predict outcomes. Such models may be used to predict an event in the future, but may equally be applied to any type of unknown event, regardless of when it occurred. For example, predictive models are often used to detect crimes and identify suspects, after the crime has taken place. Hence, the more general term estimation model is used herein. Nearly any regression model can be used for prediction or estimation purposes. Broadly speaking, there are two classes of predictive models: parametric and non-parametric. A third class, semi-parametric models, includes features of both. Parametric models make specific assumptions with regard to one or more of the population parameters that characterize the underlying distribution(s), while non-parametric regressions make fewer assumptions than their parametric counterparts. Various examples of such models are known in the art, such as using naive Bayes classifiers, a k-nearest neighbors algorithm, random forests etc., and the exact application of estimation model is not decisive for the invention or any of the embodiments provided herein. In the context of the invention, the estimation model could be a specific design of a Deep Neural Network (DNN) acting as an "object detector". DNN's are compute-intensive algorithms which may employ millions of parameters which are specifically tuned by "training" using large amounts of relevant and annotated data, which makes them later, when deployed, being able to "detect", i.e. predict or estimate to a certain "score", the content of new, un-labelled, input data such as sensor data. Such an estimation model may be trained to detect objects very generally from e.g. input sensor data representing an image, but typical examples include detecting e.g. "suspect people" or a specific individual. Continuous model adaptation, or "online learning", where such a model could adapt and improve to its specific environment is complex and can take various forms, but one example is when a deployed model in a device 300 can escalate its sensor data vertically to a more capable network node 330, 350 with a more complex estimation model, which can provide a "ground truth" estimation and at the same time use the escalated sensor data to re-train the edge device model in the device 300 with some of its recently collected inputs, thereby adjusting the less capable device's 300 estimation model to its actual input.

In various scenarios, certain sensor data will result in good estimation from all devices' 300, 320, 340 estimation models. Other sensor data will fail to reach a reliability value threshold, but a neighboring device 320, 340 will provide a good result, meeting a reliability value threshold. In other cases, all devices 300, 320, 340 may fail to reach the reliability level, but aggregating the result may nevertheless create a good estimation. This may apply where the estimation score from all devices 300, 320, 340 reflects an almost certain result, but if many are almost certain than the likelihood of them being certain increases.

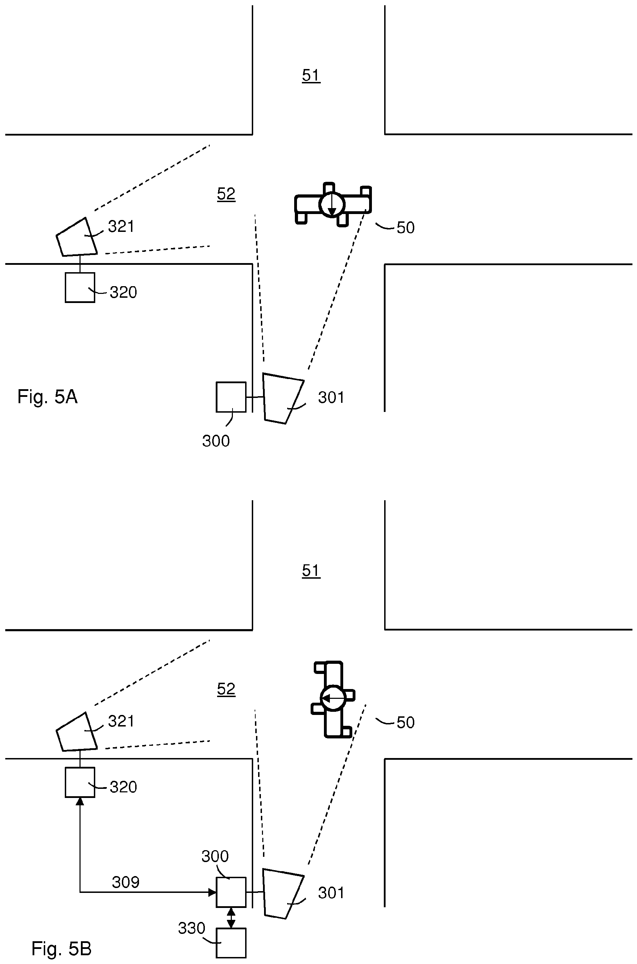

With reference to Figs 5A and 5B, one embodiment will now be described, which is usable also for understanding other embodiments and the general concept of the invention. Herein, the function rather than the structure of included devices 300, 320 are discussed, which function may e.g. be accomplished by means of a device as discussed with reference to Fig. 3.

As shown in Fig. 5A, a first device 300 is connected to, and possibly includes, a first sensor 301, which includes a first camera sensor 301 or corresponding image sensing mechanism. The first camera sensor 301 is arranged to sense a narrow environment 51 such as a hallway or street and is directed along the extension of that narrow environment 51. The first device 300 is configured to run an estimation model, so as to carry out an estimation task. The estimation task may be as simple as detecting a human, but in this example the task is to recognize a person by image processing of first sensor data obtained from the first camera sensor 301, e.g. using image or movement recognition algorithms. The estimation model incorporated in the first device 300 includes a learning model and is thereby trained be successive input of first sensor data from the first camera sensor 301. In one example, one or more persons may frequently pass in the environment in a direction towards the first camera sensor 301, as indicated by a person 50 in the drawing. The estimation model in the first device 300 may thus be trained, by repeated detection of that person 50, so as to improve the capability of recognizing the person 50, in particular from an angle substantially facing the person 50.

A second device 320 is connected to a second camera sensor 321, arranged to sense another environment 52. In the drawing, the first environment 51 and the second environment 52 partly overlap, but that need not be the case. The second environment 52, covered by the second camera sensor 321, may frequently sense an image of the person from a different angle, such as from the side, as shown in the drawing. The estimation model incorporated in the second device 320 includes a learning model and is thereby trained be successive input of first sensor data from the second camera sensor 301, so as to improve the capability of recognizing the person 50, in particular from a side angle to the person 50.

Turning to Fig. 5B, the same setup as in Fig. 5A is shown. However, in this scenario the person 50 is passing at a different angle, and along the extension of the second environment 52. The first device 300 may be unaccustomed to recognizing the person 50 from this angle. Therefore, the first device 300 is configured to compute estimation output data, such as identification of the passing person 50, by operating a method as broadly and specifically disclosed herein. This may involve obtaining first sensor data, by receiving first sensor data from the connected first camera sensor 301, and subsequently computing a first estimation score based on said first sensor data, using a first estimation model, which is locally stored and used in the first device 300.

The first estimation score may e.g. reflect that the person detected from image processing of the first sensor data is unidentified, or that it matches person 50. The first device 300 may then be configured to determine a quality level of said first estimation score. The quality level may e.g. be that a match is at all obtained, or a certain confidence level of a match is obtained. Either dependent on that said quality level does not meet a threshold level, or as a rule, the first device 300 may be configured to transmit said first sensor data to the second device 320, e.g. over a local area communication connection 309.

The second device 320 will thus be in receipt of the first sensor data obtained in the first device 300, e.g. the raw image sensor data. By specific request, or as determined based on a certain communication protocol associated with the transmission of the first sensor data, the second device 320 is thereby configured to compute a second estimation score based on said first sensor data, using a second estimation model which is local to the second device 320. The second device may in the present scenario be accustomed to recognizing the person 50 from a side angle, as in the scenario shown in Fig. 5A. Hence, by running the second estimation model in the second device 320 on the sensor data obtained by the first sensor 301, which reflects a side image or video of the person 50, may result in an estimation score with a higher quality level than that obtained by the first device 300. The second device may be configured to transmit the estimation score back to the first device 300, either dependent on the obtained quality level or regardless of the quality level, as determined by a default rule or e.g. as prescribed in the original transmission received in combination with the first sensor data.

The first device 300 will then receive the second estimation score and is then in possession of at least two estimation scores. As outlined before, the method and system may include a plurality of devices 300, 320, 340, which together render a plurality of estimation scores which may be collected in the first device 300. Dependent on the first estimation score and the received second estimation score, the first device 300 subsequently determines estimation output data. The estimation output data may be an indication of recognition of the person 50 and may e.g. include a confidence value attached to the identification result. Where estimation scores for two or more devices are combined, a confidence level based on the weighted average of their respective scores may e.g. be obtained, with weighting based upon similarity measures of image features from historical data stored in each device 300, 320. Furthermore, a reduced variance may be obtained.

The first device 300 is an edge device of a communication network, and may be further configured to transmit the estimation output data, established based on ensemble estimation from two or more estimation scores, in uplink to a network node 330 of the communication network.

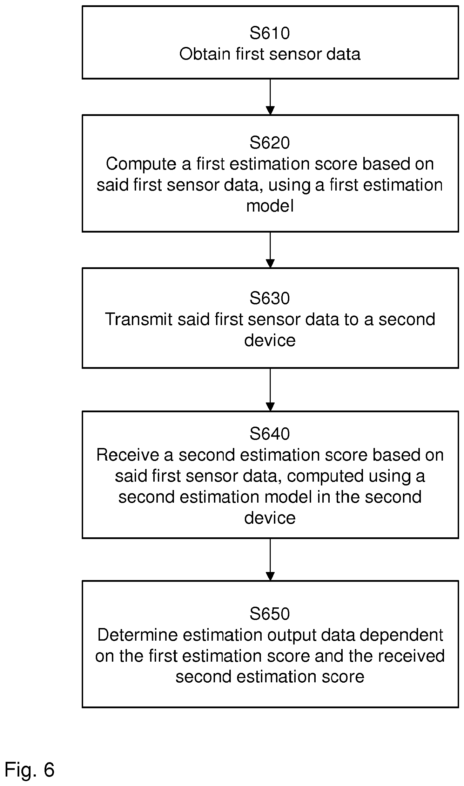

In broad terms, a method is provided as shown in Fig. 6. With reference to that drawing, a method is performed at a first device 300, for computing estimation output data. The first device 300 is configured to
obtain S610 first sensor data;
compute S620 a first estimation score based on said first sensor data, using a first estimation model;
transmit S630 said first sensor data to a second device;
receive S640 a second estimation score based on said first sensor data, computed using a second estimation model in the second device; and
dependent on the first estimation score and the received second estimation score, determine S650 estimation output data.

These general steps may be further configured and substantiated in accordance with the embodiments outlined herein.

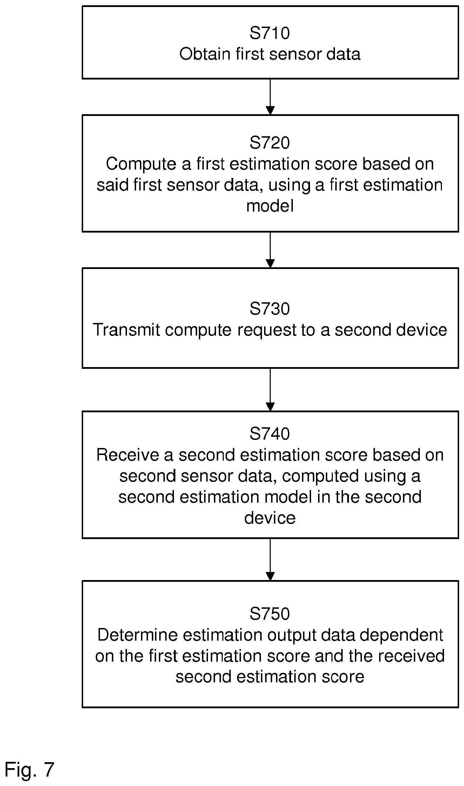

In the alternative embodiment, outlined under point II above broad terms, a method is provided as shown in Fig. 7. With reference to that drawing, a method is performed at a first device 300, for computing estimation output data. The first device 300 is configured to
obtain S710 first sensor data;
compute S720 a first estimation score based on said first sensor data, using a first estimation model;
transmit S730 a compute request to a second device, which may be carried out dependent on the outcome of the computation of first estimation score or by predetermined configuration. The second device is configured to obtain second sensor data from a second sensor, which is configured to detect sensor data from a common environment as the first sensor.

Receive S740 a second estimation score based on such second sensor data, computed using a second estimation model in the second device; and
dependent on the first estimation score and the received second estimation score, determine S750 estimation output data.

These general steps may be further configured and substantiated in accordance with the embodiments outlined herein.

In general terms, the system, device and method as proposed herein will improve upon a state of the system by utilizing the collectively available compute resources available among similar devices in the close vicinity. This allows for a collectively computed estimation which could achieve a result closer/close to the quality of what may be obtained by escalation to a higher end node 330, 350 which is otherwise more capable in terms of computing power and quality. Furthermore, by utilizing local area communication 309, e.g. by radio, the bandwidth and resource cost required for escalation is alleviated. Communicating the same data over local communication radio can be a magnitude of order less power demanding. The proposed solution also ensuring qualitative operation even when network access becomes unavailable to higher node 330. The system could also dynamically prioritize a lower device power consumption and lowest latency decision making when escalation bandwidth is low.

## Claims

1. A method, performed at a first edge device connected in uplink to a network node of a communication network for detection of an object based on sensor data, comprising:
obtaining (S610, S710) first sensor data;
processing (S620, S720) the first sensor data for object detection to obtain a first estimation score based on said first sensor data, using a first estimation model;
transmitting, through a lateral connection in a local network to a second edge device, either:
said first sensor data (S630), or
a request for a second estimation score (S740);
receiving a second estimation score computed in the second edge device using a second estimation model for object detection based on either:
- said first sensor data (S640) when the first sensor data is transmitted through the lateral connection, or
- second sensor data (S740) when the request for a second estimation score is transmitted through the lateral connection, and wherein the second sensor data is obtained in the second edge device and pertains to a common environment as the first sensor data; and
dependent on the first estimation score and the received second estimation score, determining (S650, S750) estimation output data.

2. The method of claim 1, comprising
determining a quality level of said first estimation score, wherein the step of transmitting said first sensor data is carried out if said quality level does not meet a threshold level.

3. The method of claim 1 or 2, comprising
determining a value associated with a reliability of at least one of said first and second estimation score, wherein determining estimation output data includes weighing said first and second estimation score.

4. The method of any preceding claim, wherein the first edge device is connected to a first sensor for obtaining first sensor data, and, when the request for the second estimation score is transmitted through the lateral connection, the second edge device is connected to a second sensor for obtaining second sensor data.

5. The method of any preceding claim, wherein the first estimation model and the second estimation model are learning models, configured for providing an estimation output based on a common sensor data type.

6. The method of claim 5, wherein the first estimation model is trained with sensor data obtained in the first edge device, and the second estimation model is trained with sensor data obtained in the second edge device.

7. The method of any preceding claim, wherein computing estimation output data includes computing a mean score based on at least the first estimation score and the second estimation score.

8. An edge device (300) for detection of an object based on sensor data, comprising:
an uplink connection to a network node of a communication network;
a sensor input interface for obtaining first sensor data from one or more sensors;
a control unit, which control unit includes:
a data memory holding computer program code representing a first local estimation model, and
a processing device configured to execute the computer program code;
wherein the control unit is configured to control the device to:
- obtain (S610) first sensor data;
- process (S620) said first sensor data for object detection to obtain a first estimation score based on said first sensor data, using a first estimation model;
- transmit (S630) said first sensor data to a second edge device through a lateral connection in a local network;
- receive (S640) a second estimation score, computed in the second edge device based on said first sensor data using a second estimation model; and
- dependent on the first estimation score and the received second estimation score, determine (S650) estimation output data.

9. An edge device (300) for detection of an object based on sensor data, comprising:
an uplink connection to a network node of a communication network;
a sensor input interface for obtaining first sensor data from one or more sensors
a control unit, which control unit includes:
a data memory holding computer program code representing a first local estimation model, and
a processing device configured to execute the computer program code;
wherein the control unit is configured to control the device to:
- obtain (S710) first sensor data;
- process (S720) said first sensor data for object detection to obtain a first estimation score based on said first sensor data, using a first estimation model;
- transmit (S730), to a second edge device through a lateral connection in a local network, a request for a second estimation score;
- receive (S740) a second estimation score, computed in the second device based on second sensor data using a second estimation model, wherein the second sensor data is obtained in the second edge device and pertains to a common environment as the first sensor data; and
- dependent on the first estimation score and the received second estimation score, determine (S750) estimation output data.

10. The edge device of claim 8 or 9, wherein the control unit is configured to control the device to:
determine a quality level of said first estimation score, and to transmit said first sensor data responsive to said quality level not meeting a threshold level.

11. The edge device of any of claims 8-10, wherein the control unit is configured to control the device to:
determine a value associated with a reliability of at least one of said first and second estimation score, and
weighing said first and second estimation score upon determining said estimation output data.

12. The edge device of claim any of claims 8-11, wherein the edge device includes at least one of said one or more sensors.

13. The edge device of any of claims 8-12,, wherein the first estimation model and the second estimation model are learning models, configured for providing an estimation output based on a common sensor data type.

14. The edge device of claim 13, wherein the first estimation model is trained with sensor data obtained in the first edge device, and the second estimation model is trained with sensor data obtained in the second edge device.

15. The edge device of any of claims 8-14, wherein to determine estimation output data includes to compute a mean score based on at least the first estimation score and the second estimation score.

## Patentansprüche

1. Verfahren, das an einer ersten Edge-Vorrichtung durchgeführt wird, die im Uplink mit einem Netzknoten eines Kommunikationsnetzes verbunden ist, zum Erfassen eines Objekts auf der Grundlage von Sensordaten, umfassend:
Erhalten (S610, S710) von ersten Sensordaten;
Verarbeiten (S620, S720) der ersten Sensordaten zur Objekterfassung, zu dem Zweck, einen ersten Schätzungswert auf der Grundlage der ersten Sensordaten unter Verwendung eines ersten Schätzungsmodells zu erhalten;
Übertragen, über eine Seitenverbindung in einem lokalen Netzwerk an eine zweite Edge-Vorrichtung, von einem der folgenden Punkte:
den ersten Sensordaten (S630), oder
einer Anforderung nach einem zweiten Schätzungswert (S740) ;
Empfangen eines zweiten Schätzungswertes, der in der zweiten Edge-Vorrichtung unter Verwendung eines zweiten Schätzungsmodells zur Objekterfassung berechnet wurde, und zwar auf der Grundlage von einem der folgenden Punkte:
- den ersten Sensordaten (S640), wenn die ersten Sensordaten über die Seitenverbindung übertragen werden, oder
- den zweiten Sensordaten (S740), wenn die Anforderung nach einem zweiten Schätzungswert über die Seitenverbindung übertragen wird, und wobei die zweiten Sensordaten in der zweiten Edge-Vorrichtung erhalten werden und sich auf eine gemeinsame Umgebung wie die ersten Sensordaten beziehen; und
Bestimmen (S650, S750), in Abhängigkeit vom ersten Schätzungswert und dem empfangenen zweiten Schätzungswert, von Schätzungsausgabedaten.

2. Verfahren nach Anspruch 1, umfassend:
Bestimmen eines Qualitätsniveaus des ersten Schätzungswertes, wobei der Schritt des Übertragens der ersten Sensordaten ausgeführt wird, wenn das Qualitätsniveau ein Schwellenwertniveau nicht erreicht.

3. Verfahren nach Anspruch 1 oder 2, umfassend:
Bestimmen eines Wertes, der einer Zuverlässigkeit von mindestens einem vom ersten und dem zweiten Schätzungswert zugeordnet ist, wobei das Bestimmen von Schätzungsausgabedaten das Gewichten des ersten und des zweiten Schätzungswertes beinhaltet.

4. Verfahren nach einem der vorhergehenden Ansprüche, wobei die erste Edge-Vorrichtung mit einem ersten Sensor zum Erhalten erster Sensordaten verbunden ist, und, wenn die Anforderung nach dem zweiten Schätzungswert über die Seitenverbindung übertragen wird, die zweite Edge-Vorrichtung mit einem zweiten Sensor zum Erhalten zweiter Sensordaten verbunden ist.

5. Verfahren nach einem der vorhergehenden Ansprüche, wobei das erste Schätzungsmodell und das zweite Schätzungsmodell Lernmodelle sind, die dafür ausgelegt sind, eine Schätzungsausgabe auf der Grundlage einer gemeinsamen Art von Sensordaten bereitzustellen.

6. Verfahren nach Anspruch 5, wobei das erste Schätzungsmodell mit Sensordaten trainiert wird, die in der ersten Edge-Vorrichtung erhalten werden, und das zweite Schätzungsmodell mit Sensordaten trainiert wird, die in der zweiten Edge-Vorrichtung erhalten werden.

7. Verfahren nach einem der vorhergehenden Ansprüche, wobei das Berechnen von Schätzungsausgabedaten das Berechnen eines gemittelten Wertes auf der Grundlage mindestens des ersten Schätzungswertes und des zweiten Schätzungswertes beinhaltet.

8. Edge-Vorrichtung (300) zur Erfassung eines Objekts auf der Grundlage von Sensordaten, umfassend:
eine Uplink-Verbindung zu einem Netzknoten eines Kommunikationsnetzes;
eine Sensoreingabesschnittstelle zum Erhalten erster Sensordaten von einem oder mehreren Sensoren;
eine Steuereinheit, wobei die Steuereinheit folgende Elemente beinhaltet:
einen Datenspeicher, der Computerprogrammcode enthält, der ein erstes lokales Schätzungsmodell repräsentiert, und
eine Verarbeitungsvorrichtung, die zum Ausführen des Computerprogrammcodes ausgelegt ist;
wobei die Steuereinheit dafür ausgelegt ist, die Vorrichtung zum Ausführen folgender Vorgänge zu steuern:
- Erhalten (S610) von ersten Sensordaten;
- Verarbeiten (S620) der ersten Sensordaten zur Objekterfassung, zu dem Zweck, einen ersten Schätzungswert auf der Grundlage der ersten Sensordaten unter Verwendung eines ersten Schätzungsmodells zu erhalten;
- Übertragen (S630), über eine Seitenverbindung in einem lokalen Netzwerk, der ersten Sensordaten an eine zweite Edge-Vorrichtung;
- Empfangen (S640) eines zweiten Schätzungswertes, der in der zweiten Edge-Vorrichtung auf der Grundlage der ersten Sensordaten unter Verwendung eines zweiten Schätzungsmodells berechnet wird; und
- Bestimmen (S650), in Abhängigkeit vom ersten Schätzungswert und dem empfangenen zweiten Schätzungswert, von Schätzungsausgabedaten.

9. Edge-Vorrichtung (300) zur Erfassung eines Objekts auf der Grundlage von Sensordaten, umfassend:
eine Uplink-Verbindung zu einem Netzknoten eines Kommunikationsnetzes;
eine Sensoreingabeschnittstelle zum Erhalten erster Sensordaten von einem oder mehreren Sensoren;
eine Steuereinheit, wobei die Steuereinheit folgende Elemente beinhaltet:
einen Datenspeicher, der Computerprogrammcode enthält, der ein erstes lokales Schätzungsmodell repräsentiert, und
eine Verarbeitungsvorrichtung, die zum Ausführen des Computerprogrammcodes ausgelegt ist;
wobei die Steuereinheit dafür ausgelegt ist, die Vorrichtung zum Ausführen folgender Vorgänge zu steuern:
- Erhalten (S710) von ersten Sensordaten;
- Verarbeiten (S720) der ersten Sensordaten zur Objekterfassung, zu dem Zweck, einen ersten Schätzungswert auf der Grundlage der ersten Sensordaten unter Verwendung eines ersten Schätzungsmodells zu erhalten;
- Übertragen (S730), an eine zweite Edge-Vorrichtung über eine Seitenverbindung in einem lokalen Netzwerk, einer Anforderung nach einem zweiten Schätzungswert;
- Empfangen (S740) eines zweiten Schätzungswertes, das in der zweiten Vorrichtung auf der Grundlage von zweiten Sensordaten unter Verwendung eines zweiten Schätzungsmodells berechnet wird, wobei die zweiten Sensordaten in der zweiten Edge-Vorrichtung erhalten werden und sich auf eine gemeinsame Umgebung mit den ersten Sensordaten beziehen; und
- Bestimmen (S750), in Abhängigkeit vom ersten Schätzungswert und dem empfangenen zweiten Schätzungswert, von Schätzungsausgabedaten.

10. Edge-Vorrichtung nach Anspruch 8 oder 9, wobei die Steuereinheit dafür ausgelegt ist, die Vorrichtung zu folgenden Vorgängen zu steuern:
Bestimmen eines Qualitätsniveaus des ersten Schätzungswertes und Übertragen der ersten Sensordaten,
wenn das Qualitätsniveau einen Schwellenwert nicht erreicht.

11. Edge-Vorrichtung nach einem der Ansprüche 8 bis 10, wobei die Steuereinheit dafür ausgelegt ist, die Vorrichtung zu folgenden Vorgängen zu steuern:
Bestimmen eines Wertes, der einer Zuverlässigkeit von mindestens einem vom ersten und dem zweiten Schätzungswert zugeordnet ist, und
Gewichten des ersten und des zweiten Schätzungswertes nach dem Bestimmen der Schätzungsausgabedaten.

12. Edge-Vorrichtung nach einem der Ansprüche 8 bis 11, wobei die Edge-Vorrichtung mindestens einen vom einen oder den mehreren Sensoren beinhaltet.

13. Edge-Vorrichtung nach einem der Ansprüche 8 bis 12, wobei das erste Schätzungsmodell und das zweite Schätzungsmodell Lernmodelle sind, die dafür ausgelegt sind, eine Schätzungsausgabe auf der Grundlage einer gemeinsamen Art von Sensordaten bereitzustellen.

14. Edge-Vorrichtung nach Anspruch 13, wobei das erste Schätzungsmodell mit Sensordaten trainiert wird, die in der ersten Edge-Vorrichtung erhalten werden, und das zweite Schätzungsmodell mit Sensordaten trainiert wird, die in der zweiten Edge-Vorrichtung erhalten werden.

15. Edge-Vorrichtung nach einem der Ansprüche 8 bis 14, wobei das Bestimmen von Schätzungsausgabedaten das Berechnen eines gemittelten Wertes auf der Grundlage mindestens des ersten Schätzungswertes und des zweiten Schätzungswertes beinhaltet.

## Revendications

1. Procédé réalisé sur un premier dispositif de périphérie connecté en liaison montante à un noeud de réseau d'un réseau de communication pour une détection d'objet en fonction de données de capteurs, comprenant :
l'obtention (S610, S710) de premières données de capteurs ;
le traitement (S620, S720) des premières données de capteurs pour une détection d'objet afin d'obtenir un premier score d'estimation en fonction desdites premières données de capteurs, à l'aide d'un premier modèle d'estimation ;
la transmission, par le biais d'une connexion latérale dans un réseau local à un second dispositif de périphérie, soit :
desdites premières données de capteurs (S630), soit
d'une demande de second score d'estimation (S740) ;
la réception d'un second score d'estimation calculé dans le second dispositif de périphérie à l'aide d'un second modèle d'estimation pour une détection d'objet basée soit
- sur lesdites premières données de capteurs (S640) lorsque les premières données de capteurs sont transmises par le biais de la connexion latérale, soit
- sur des secondes données de capteurs (S740) lorsque la demande d'un second score d'estimation est transmise par le biais de la connexion latérale, et dans lequel les secondes données de capteurs sont obtenues dans le second dispositif de périphérie et se rapportent à un environnement commun avec les premières données de capteurs ; et
en fonction du premier score d'estimation et du second score d'estimation reçu, la détermination (S650, S750) de données de sortie d'estimation.

2. Procédé selon la revendication 1, comprenant
la détermination d'un niveau de qualité dudit premier score d'estimation, dans lequel l'étape de transmission desdites premières données de capteurs est réalisée si ledit niveau de qualité n'atteint pas un niveau seuil.

3. Procédé selon la revendication 1 ou 2, comprenant
la détermination d'une valeur associée à une fiabilité d'au moins un desdits premier et second scores d'estimation, dans lequel la détermination des données de sortie d'estimation comprend la pondération desdits premier et second scores d'estimation.

4. Procédé selon toute revendication précédente, dans lequel le premier dispositif de périphérie est connecté à un premier capteur pour obtenir des premières données de capteur, et, lorsque la demande de second score d'estimation est transmise par le biais de la connexion latérale, le second dispositif de périphérie est connecté à un second capteur pour obtenir les secondes données de capteurs.

5. Procédé selon toute revendication précédente, dans lequel le premier modèle d'estimation et le second modèle d'estimation sont des modèles d'apprentissage, configurés pour fournir une sortie d'estimation basée sur un type de données de capteurs commun.

6. Procédé selon la revendication 5, dans lequel le premier modèle d'estimation est entraîné avec des données de capteurs obtenues dans le premier dispositif de périphérie, et le second modèle d'estimation est entraîné avec des données de capteurs obtenues dans le second dispositif de périphérie.

7. Procédé selon toute revendication précédente, dans lequel le calcul des données de sortie d'estimation comprend le calcul d'un score moyen en fonction au moins du premier score d'estimation et du second score d'estimation.

8. Dispositif de périphérie (300) pour la détection d'un objet en fonction de données de capteurs, comprenant :
une connexion de liaison montante à un noeud de réseau d'un réseau de communication ;
une interface d'entrée de capteur pour obtenir des premières données de capteurs à partir d'un ou plusieurs capteurs ;
une unité de commande, laquelle comprend :
une mémoire de données renfermant un code de programme d'ordinateur représentant un premier modèle d'estimation locale, et
un dispositif de traitement configuré pour exécuter le code de programme d'ordinateur ;
dans lequel l'unité de commande est configurée afin de commander le dispositif pour :
- obtenir (S610) des premières données de capteurs ;
- traiter (S620) lesdites premières données de capteurs pour une détection d'objet afin d'obtenir un premier score d'estimation en fonction desdites premières données de capteurs, à l'aide d'un premier modèle d'estimation ;
- transmettre (S630) lesdites premières données de capteurs à un second dispositif de périphérie par le biais d'une connexion latérale dans un réseau local ;
- recevoir (S640) un second score d'estimation, calculé dans le second dispositif de périphérie en fonction des premières données de capteurs à l'aide d'un second modèle d'estimation ; et
- en fonction du premier score d'estimation et du second score d'estimation reçu, déterminer (S650) des données de sortie d'estimation.

9. Dispositif de périphérie (300) pour la détection d'un objet en fonction de données de capteurs, comprenant :
une connexion de liaison montante à un noeud de réseau d'un réseau de communication ;
une interface d'entrée de capteur pour obtenir des premières données de capteurs à partir d'un ou plusieurs capteurs ;
une unité de commande, laquelle comporte :
une mémoire de données renfermant un code de programme d'ordinateur représentant un premier modèle d'estimation locale, et
un dispositif de traitement configuré pour exécuter le code de programme d'ordinateur ;
dans lequel l'unité de commande est configurée afin de commander le dispositif pour :
- obtenir (S710) des premières données de capteurs ;
- traiter (S720) lesdites premières données de capteur pour une détection d'objet afin d'obtenir un premier score d'estimation en fonction desdites premières données de capteurs, à l'aide d'un premier modèle d'estimation ;
- transmettre (S730), à un second dispositif de périphérie par le biais d'une connexion latérale dans un réseau local, une demande de second score d'estimation ;
- recevoir (S740) un second score d'estimation, calculé dans le second dispositif en fonction des secondes données de capteurs à l'aide d'un second modèle d'estimation, dans lequel les secondes données de capteurs sont obtenues dans le second dispositif de périphérie et se rapportent à un environnement commun avec les premières données de capteurs ; et
- en fonction du premier score d'estimation et du second score d'estimation reçu, déterminer des données de sortie d'estimation (S750).

10. Dispositif de périphérie selon la revendication 8 ou 9, dans lequel l'unité de commande est configurée afin de commander le dispositif pour :
déterminer un niveau de qualité dudit premier score d'estimation, et transmettre lesdites premières données de capteurs quand ledit niveau de qualité n'atteint pas un niveau seuil.

11. Dispositif de périphérie selon l'une quelconque des revendications 8 à 10, dans lequel l'unité de commande est configurée afin de commander le dispositif pour :
déterminer une valeur associée à une fiabilité d'au moins un desdits premier et second scores d'estimation, et
pondérer lesdits premier et second scores d'estimation à la détermination desdites données de sortie d'estimation.

12. Dispositif de périphérie selon l'une quelconque des revendications 8 à 11, le dispositif de périphérie comprenant au moins un desdits un ou plusieurs capteurs.

13. Dispositif de périphérie selon l'une quelconque des revendications 8 à 12, dans lequel le premier modèle d'estimation et le second modèle d'estimation sont des modèles d'apprentissage, configurés pour fournir une sortie d'estimation basée sur un type de données de capteur commun.

14. Dispositif de périphérie selon la revendication 13, dans lequel le premier modèle d'estimation est entraîné avec des données de capteur obtenues dans le premier dispositif de périphérie, et le second modèle d'estimation est entraîné avec des données de capteur obtenues dans le second dispositif de périphérie.

15. Dispositif de périphérie selon l'une quelconque des revendications 8 à 14, dans lequel la détermination des données de sortie d'estimation comprend le calcul d'un score moyen en fonction au moins du premier score d'estimation et du second score d'estimation.
